**Europäisches Patentamt**

**European Patent Office**

**Office européen des brevets**

(19)

(11) **EP 1 067 775 A2**

(12) **EUROPEAN PATENT APPLICATION**

(43) Date of publication:
**10.01.2001 Bulletin 2001/02**

(51) Int Cl.[7]: **H04N 5/14**, H04N 5/16

(21) Application number: **00302086.4**

(22) Date of filing: **15.03.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **15.03.1999 US 124538 P**<br>**15.03.1999 US 124408 P**<br>**30.12.1999 US 475652**<br><br>(71) Applicant: **Texas Instruments Incorporated**<br>**Dallas, Texas 75251 (US)**<br><br>(72) Inventors:<br>• **Chen, Zhiliang Julian,**<br>**Plano, Texas 75093 (US)** | • **Dierschke, Eugene G.,**<br>**Dallas, Texas 75248 (US)**<br>• **Clynes, Steven Derek,**<br>**Allen, Texas 75002, (US)**<br>• **Liu, Anli,**<br>**Plano, Texas 75024, (US)**<br><br>(74) Representative:<br>**Legg, Cyrus James Grahame et al**<br>**ABEL & IMRAY,**<br>**20 Red Lion Street**<br>**London WC1R 4PQ (GB)** |

(54) **Digital imaging control with selective intensity resolution enhancement**

(57)     Image enhancement is automatically achieved by calibrating the reference voltage and gain of a differential amplifier and the integration interval so as to provide an input to a differential analog to digital converter (ADC) that utilizes the full dynamic range of the ADC. When used with a CMOS array, the imaging logic can be fabricated on a single chip with the array using combinational logic for fast, inexpensive calibration. Another advantageous feature is the ability to expand a desired portion of the luminance spectrum of the image in order to increase the digital resolution of the resulting image for that portion of the spectrum of interest.

FIG. 2

EP 1 067 775 A2

**Description**

This application claims benefit of U.S. Patent Applications Nos. 60/124538 and 60/124408 filed on 15 March 1999 and 09/475652 filed on 30 December 1999 which applications are incorporated herein by reference. Copies of US 60/124538 and US 60/124408 are available for inspection in the file of this application.

This application is related to and accompanied by a copy of a commonly assigned, co-pending European patent application entitled "Filtering of defective picture elements in digital imagers" (Applicant Docket No. TI-29034) filed concurrently herewith and incorporated herein by reference. A copy of the co-pending European patent application entitled "Filtering of defedtive picture elements in digital imagers" is available for inspection in the file of this application.

This invention relates generally to digital imaging devices and specifically to automatic and selective intensity resolution enhancement of a digital image.

An image consists of an array of picture elements and those picture elements are referred to in the following description as pixels.

Digital imaging devices are becoming increasingly popular in a variety of applications, including digital cameras, fingerprint recognition, digital scanners and copiers, and the like. Typical prior art digital imaging devices are based on charge coupled device (CCD) technology. CCD devices have an array of CCD cells, each cell comprising a pixel. Each CCD pixel outputs a voltage signal in proportion to the intensity of light impinging upon the cell. This analog voltage signal can be converted to a digital signal for further processing, digital filtering, storage and the like. As is well known in the art, a two dimensional digital image can be constructed from the voltage signals output from a two-dimensional array of CCD cells, commonly referred to as a sensor array.

Depending upon ambient conditions such as temperature and lighting and the characteristics of the CCD array, the resulting image may have poor resolution. Poor image resolution could result from very bright light impinging upon sensor array, in which case the resulting image might appear washed out, or low light conditions, in which case the resulting image might appear dark and indistinct. Another contributor to poor image quality might be insufficient contrast between light and dark pixels, resulting in a blurred or faded image. While digital signal processing may be employed to compensate for certain image quality problems, considerable image improvement can be obtained by adjusting how the analog voltage signal coming from the sensor array is handled prior to being input to the analog to digital converter.

The need exists, therefore, for a method of adjusting the digital imaging. A common technique for improving image resolution is to increase the contrast lighting conditions.

The present invention provides a method of controlling a luminance signal in an image-processing device including the steps of:

> receiving a plurality of selected data signals corresponding to the luminance values of respective picture elements which form a part of an image,
> generating an average value signal representing an average of the values of the plurality of selected data signals,
> generating a reference signal,
> determining a differential signal value representing the difference between the reference signal value and the average value signal and
> so adjusting the reference signal value that the differential signal value corresponds to a selected luminance level within the range of luminance levels which a first part of the image-processing device is capable of accommodating.

The present invention provides a method of automatic gain control in an image processor including an amplifier provided with a reference signal input port, a signal input port and an output port, the gain of the amplifier being adjustable, and an analog to digital converter including an input port connected to the output port of the amplifier and an output port for providing a digital code corresponding to the output value from the amplifier,

> the method including the steps of:
> reading a frame of luminance data and determining an average luminance value of the frame and the digital code output by the ADC corresponding to average luminance value,
> calculating a reference signal value that will cause the digital code output by the ADC to be at a selected value when the signal input to the programmable amplifier is set to the average luminance value,
> calculating a gain that will cause the digital output code of the ADC to be at the selected value when the signal input to the programmable amplifier is set to the average luminance value,
> setting the reference signal value and the gain to the calculated values and
> reading the next frame and repeating the above steps.

The invention also provides a means for controlling a luminance signal in an image-processing device including:

means for receiving a plurality of selected data signals corresponding to the luminance values of respective picture elements which form a part of an image,

means for generating an average value signal representing an average of the values of the plurality of selected data signals,

means for generating a reference signal,

means for determining a differential signal value representing the difference between the reference signal value and the average value signal and

means for so adjusting the reference signal value that the differential signal value corresponds to a selected luminance level within the range of luminance levels which a first part of the image-processing device is capable of accommodating.

The present invention may be included in an automatic gain control circuit comprising:

an amplifier for receiving as input a frame of a luminance signal and a reference signal and outputting a differential signal corresponding to the difference between the luminance signal and the reference signal, the amplifier being capable of amplifying the difference under control of a gain control signal,

a differential analog to digital converter (ADC) for receiving the signal output by the amplifier and outputting a digital signal corresponding to differential output of the amplifier,

means for calculating an average luminance value for the frame,

means for comparing the digital signal output by the ADC when the luminance signal input to the amplifier is at the average luminance value to a desired digital output and generating a difference signal,

means for adjusting the reference signal in response to the difference signal and

means for adjusting the gain control signal in response to the difference signal.

An embodiment of the present invention is an image processor comprising:

a differential amplifier for receiving as input a luminance signal and the reference signal and outputting an amplified differential signal,

a differential analog to digital converter (ADC) for receiving as input said amplified differential signal and outputting a digital signal corresponding to said amplified differential signal,

a programmable voltage source for outputting said reference signal,

a digital averager for receiving said digital signal and outputting an average luminance value and

a digital signal controller for receiving said luminance brightness value and outputting a gain control signal to said differential amplifier and a reference voltage control signal to said programmable voltage source,

the gain control signal and the reference voltage control signal being determined from the difference in (1) the digital signal of the analog to digital converter when the luminance input is at the average brightness value and (2) a desired digital signal.

The above features of the present invention will be more clearly understood from consideration of the following descriptions in connection with accompanying drawings in which:

Figure 1 illustrates a digital imaging device in which preferred embodiments of the invention may be employed,

Figure 2 is a block diagram of a preferred embodiment of a single chip CMOS imaging device,

Figure 3 is a block diagram of a preferred embodiment of an amplifier and analog to digital converter included in the imaging device of Fig. 1,

Figure 4 is a flow chart for reference voltage adjustment carried out in the imaging device of Fig. 1,

Figure 5a illustrates the output of the preferred embodiment of the amplifier,

Figure 5b is a timing diagram for generation of the reference voltage,

Figures 6a through 6d illustrate the output of the preferred embodiment of the amplifier as the reference voltage and gain are adjusted,

Figure 7a is a flow chart for gain adjustment of the amplifier,

Figure 7b illustrates the relationship between the gain factor and the programmable gain of the preferred embodiment of the amplifier,

Figure 8 is a flow chart for adjusting the integration interval of a sensor array included in Fig. 1 and

Figures 9a and 9b illustrate a full luminance spectrum for an image and a portion of the luminance spectrum of interest being expanded across the dynamic range of the preferred embodiment of the analog to digital converter, respectively.

The making and use of the various embodiments are discussed below in detail. However, it should be appreciated that the present invention provides many applicable inventive concepts which can be embodied in a wide variety of specific contexts. The specific embodiments discussed are merely illustrative of specific ways to make and use the invention, and do not limit the scope of the invention.

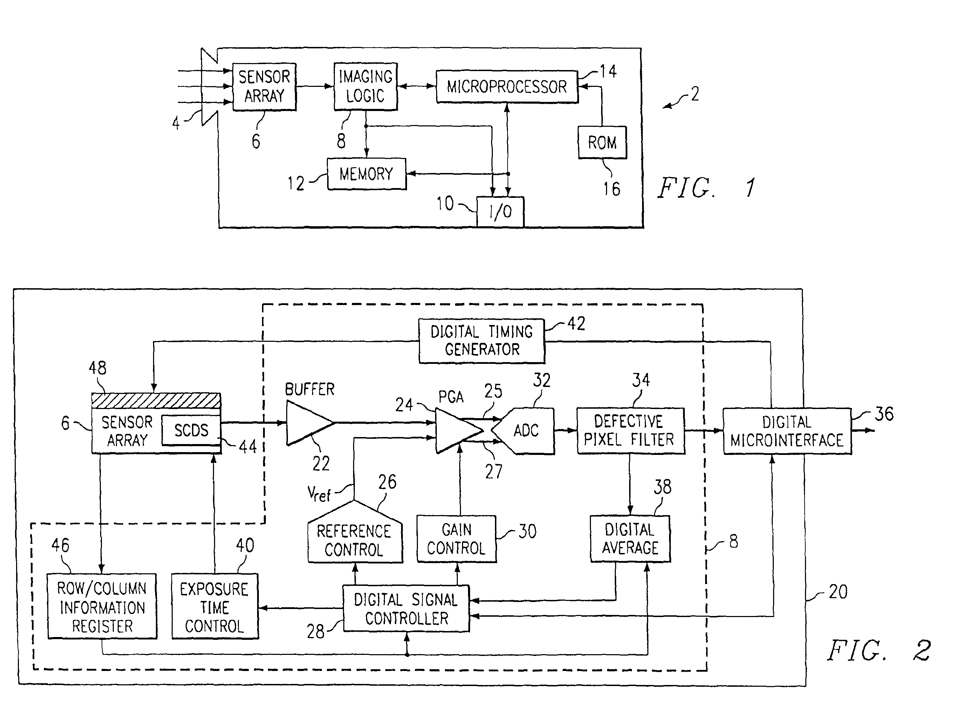

Figure 1 illustrates a digital imaging device 2 utilizing preferred embodiments of the present invention. The digital imaging device includes a lens mechanism 4 which receives light emanating or reflected from an object to be imaged and focuses the incoming light upon an array sensor 6. The array sensor 6 is preferably a CMOS sensor array of the type fully described in co-pending patent application 09/223,166, entitled Fast Frame Readout Architecture for Array Sensors with Integrated Correlated Double Sampling System, which application is incorporated herein by reference. As will be known to one skilled in the art, the sensor array 6 is comprised of a two dimensional array of CMOS sensors, each sensor corresponding to a pixel of the resulting image. Each sensor outputs an analog voltage signal, which signal is in proportion to the intensity of light impinging upon the particular sensor. The voltage signal from each sensor can be scanned in a raster format as is well known in the art to generate an analog image signal. This analog image signal is fed to imaging logic 8 where the analog signal is buffered and amplified before being converted to a digital signal. The digital signal can be filtered or further processed before being passed to an input / output (IO) port 10 in the form of pixel intensity data. Alternatively, with additional signal processing, the digital signal can be output in the form of a bitmap or other well known digital picture format.

Alternatively, the digital signal can be passed to a memory 12 for storage. The memory 12 is preferably a dynamic random access memory or a static random access memory. Alternatively, the memory 12 could be a magnetic or optical storage device, such as a magnetic diskette device, a CD-ROM, or other storage device. In each case, an appropriate device controller and interface (not shown) would be included along with the memory 12. The imaging logic 8, memory 12, and I/O port 10 are preferably under the control of a microprocessor 14, which is preferably a general purpose digital microprocessor operating under instructions stored in the memory 12 or a ROM 16. Stored instructions could also be provided via the I/O port 10 directly to the microprocessor 14, or stored in the memory 12 or the ROM 16.

In the preferred embodiment, the sensor array 6 is formed of an array of CMOS sensor cells, thus allowing for the imaging logic 8 to be formed using CMOS processes on a single integrated circuit along with the sensor array 6.

Figure 2 illustrates a single integrated circuit (IC) 20, upon which is realized both the sensor array 6 and the imaging logic 8 according to the preferred embodiment of the invention. Other features and circuits may be included within the IC 20 including internal control registers, microprocessor interface logic, memory interface logic, and the like. These features have not been illustrated as they are not necessary for an understanding of the present invention.

The details of the imaging logic 8 will now be described with reference to Figure 2. The main path for imaging signals is indicated by heavy arrows. The analog signal from the sensor array 6 is passed to a buffer 22 where the signal is strengthened and fixed pattern noise is removed. From the buffer 22 the buffered analog signal is sent to a first input of a programmable gain differential amplifier 24. The second input of the amplifier 24 receives a reference voltage, which is fed from a reference control block 26 under the control of a digital signal controller 28. The amplifier 24 also receives a gain control signal from a gain control block 30, which operates under the control of a digital signal controller 28.

The amplifier 24 maps the two inputs to a fully differential output 25, 27. In other words, the outputs 25 and 27 correspond to the difference between the value of the two input signals (i.e. the analog image signal and the reference voltage $V_{REF}$) multiplied by the gain of the amplifier 24 and centered about a common mode voltage level. This fully differential output 25, 27 is then fed to the inputs of a differential analog to digital converter (ADC) 32 where the differential value (i.e. the difference between signals 25 and 27) is converted to a digital value. The resulting digital image signal is then passed to a defective-pixel filter 34 where image errors are detected and corrected, as described in detail in co-pending patent application 09/223,165, entitled Sequential Correlated Double Sampling Technique for CMOS Area Array Sensors, which application is incorporated herein by reference.

The corrected digital image signal is then passed to a digital micro-interface 36 which provides an interface between the IC 20 and other components of the digital imager 2, such as the memory 12, microprocessor 14 or I/O port 10.

The processing of the image signal for luminance control involves the generation of an average value of the image signal by means of a digital average calculator 38 and it will be appreciated that the average value of the image signal without correction is substantially the same as the average value after correction by the defective-pixel filter 34.

Also shown in Figure 2 is a digital timing generator 42 which provides timing signals for operation of a sequential correlated doubling sampling block 44 in order to suppress CMOS sensor fixed pattern noise. A row / column information register 46 provides information to the digital signal controller 28 and the digital average calculator 38 regarding where the signal currently being processed originated on the sensor array (i.e. provides row and column information for each pixel).

The imaging logic 8 also includes a digital signal feedback loop comprising the digital average calculator 38, digital signal controller 28, reference control block 26, gain control block 30 and exposure time control 40. This feedback loop is employed to optimize the output of the amplifier 24 so as to take advantage of the fully dynamic range of the analog to digital converter (ADC) 32. This is accomplished by adjusting either the gain of amplifier 24 or the reference voltage $V_{REF}$ input or both. Two separate aspects of the image are optimized: optical black calibration ensures that optically black pixels result in a near zero value being output from the ADC 32, while ensuring that the full dynamic range of the ADC 32 is utilized; and resolution enhancement provides for optimum contrast in the image.

In a first embodiment, image resolution is accomplished automatically via the feedback loop. In an alternative embodiment, a user can select certain values to enhance the image or a portion of the image-dynamic-range of interest to the user, as will be explained in more detail below.

In automatic operation, three steps are performed on each incoming frame of data. Initially, an optical black calibration is performed on one or more rows of the frame that are known to be optically black. Second, after the full frame has been scanned, the gain and $V_{REF}$ input of amplifier 24 are adjusted in order to map the frame values over the dynamic range of ADC 32. Finally, the integration time, i.e. the frame exposure time, of each succeeding frame is adjusted in order to more closely map the frame values over the dynamic range of the ADC 32, if appropriate. Each of these steps will be discussed in more detail below.

Optical Black Calibration

Optical black calibration is accomplished by detecting a signal from pixels (i.e. CMOS sensors) that are known to be "dark," i.e. receiving no light impinging upon them. This is accomplished by the use of a light shield 48 over a portion of the sensor array 6. In the preferred embodiment, the light shield 48 covers the first four rows of pixels, although the number of shielded pixels and rows is a matter of design choice. Because these rows are known to be dark, the imaging logic can be calibrated to treat these pixels as black, i.e. to have a minimum digital value associated with them. For reasons that will become apparent, this minimum digital value should not be set to zero. In the preferred embodiment, the minimum digital value, corresponding to fully black or a fully dark pixel, is set to 64.

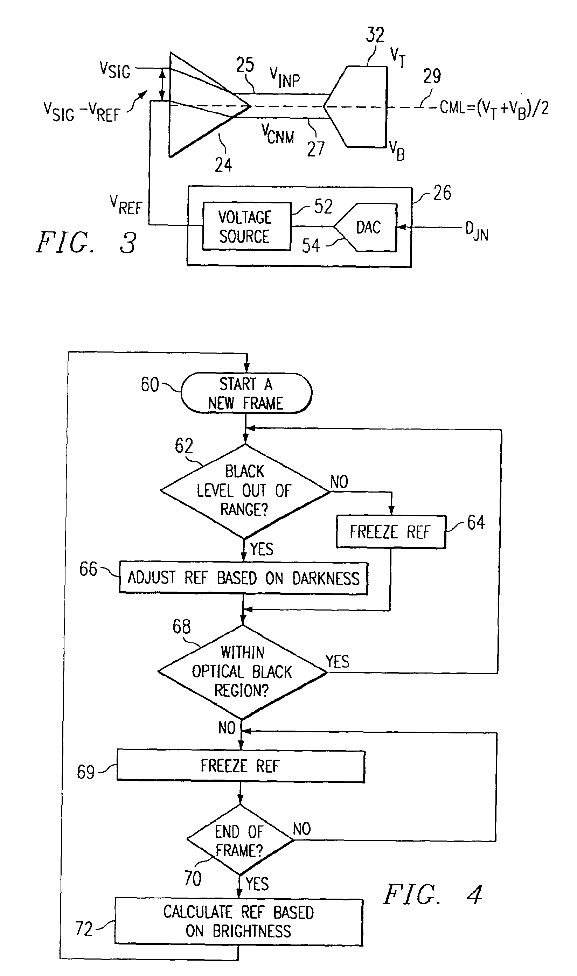

In order to calibrate to optical black, the reference voltage $V_{REF}$ input to the amplifier 24 is adjusted in order to drive the output of the ADC 32 to its "black" value, preferably 64. The relationships between $V_{REF}$ and the output of the ADC 32 will be described with reference to Figure 3, which illustrates the relationship between the amplifier 24, ADC 32, and reference control block 26.

As shown, the amplifier 24 receives as input the pixel intensity signal, $V_{sig}$ on its non-inverting input and the reference voltage signal $V_{REF}$ on its inverting input. The amplifier 24 then outputs a differential signal which is equivalent to the difference between the inputs multiplied by the gain. The amplifier 24 is configured such that the differential output signal 25, 27 is centered about the common mode level (CML) 29 of the differential ADC 32. In other words, the amplifier 24 maps the difference between its input signals to a differential signal centered about CML. The maximum and minimum operating thresholds of the ADC 32 are referred to as $V_T$ and $V_B$ respectively, and the CML level 29 is midway between $V_T$ and $V_B$.

The transfer equation for the amplifier 24 is given by:

$$V_{out} = V_{inp} - V_{inm} = g^* ( V_{sig} - V_{REF}) \qquad (1)$$

where g = the gain of the amplifier 24. In the illustrated case, g = 1, although the amplifier 24 is preferably programmable with a gain value of 2, 4, 8, or 16. Recall from Figure 3 that the output 25 $V_{inp}$ and 27 $V_{inm}$ is centered about the CML and also recognize that the maximum and minimum thresholds of the ADC 32 are centered about the CML. Hence:

$$V_{inp} = CML + (V_{inp} - V_{inm})/2. \qquad (2)$$

Because the inputs to the ADC 32 are symmetrical with respect to the CML, the output of the ADC 32 can be derived from only one of the input values. In other words, the normalized output of the ADC 32 is:

$$D_{outn} = (V_{inp} - V_B )/ / (V_T - V_B). \qquad (3)$$

Preferably the top reference for the ADC 32 is chosen as $(V_T - V_{B)}$ and the bottom reference is chosen as zero. Therefore, equation (3), which is the normalized transfer function of the circuit comprising the amplifier 24 and the ADC 32, can be rewritten, by introducing the values from equations (1) and (2), in the form:

$$D_{outn} = (g * (V_{sig} - V_{REF})) / (2 * (V_T - V_B)) + \tfrac{1}{2}. \qquad (4)$$

Equation 4 can be employed to force the value $D_{outn}$ to the desired level 64 for a given pixel signal $V_{sig}$ and for a constant gain g, by adjusting the reference voltage input $V_{REF}$ to the amplifier 24. As the known black pixels corresponding to the pixels beneath shield 48 are being scanned, the appropriate value for $V_{REF}$ is derived.

Also shown in Figure 3, the reference control block 26 includes a variable voltage source 52 and a digital to analog converter (DAC) 54. The DAC 54 receives a digital signal and converts it into an analog signal which feeds a variable voltage source 52, from which the reference voltage input $V_{REF}$ is generated. The relationship between the normalized output $D_{outn}$ of the ADC 32 and the input $D_{inm}$ is given as follows.

For a DAC 54 of size m:

$$V_{REF} = D_{inm} * (VT_{DAC} - VB_{DAC}) / (2^m - 1) \qquad (5)$$

where $D_{inm}$ is the digital input to the DAC 54, $VT_{DAC}$ is the top reference for the DAC 54 and $VB_{DAC}$ is the bottom reference for the DAC 54. The DAC 54 is designed to match the ADC 32 such that $VT_{DAC} = (V_T - V_B)$ and $VT_{DAC} = 0$, so that

$$V_{REF} = D_{inm} * (V_T - V_B) / (2^m - 1) \qquad (6)$$

Equation 6 can be introduced into equation 4, and for a given ADC 32 of size n, the relationship between changes in $D_{outn}$ and $D_{inm}$ is given by

$$delta(D_{outn}) = - delta(g * V_{REF} * (2^n - 1) / (2 * (V_T - V_B))) \qquad (7)$$

which can be simplified and solved for $D_{inm}$ in terms of $D_{outn}$ to yield

$$delta(D_{inm}) = -delta(2/g * D_{outn} * (2^m - 1) / (2^n - 1)) \qquad (8)$$

In the preferred embodiment, the ADC 32 is ten bits wide and the DAC 54 is eight bits wide, resulting in the approximation:

$$delta(D_{inm}) \approx -delta(D_{outn}) / 2 * g. \qquad (9)$$

The relationship of equation 9 allows for fast computation of the required input to the DAC 54 in order to generate the required reference voltage $V_{REF}$ for optical black calibration.

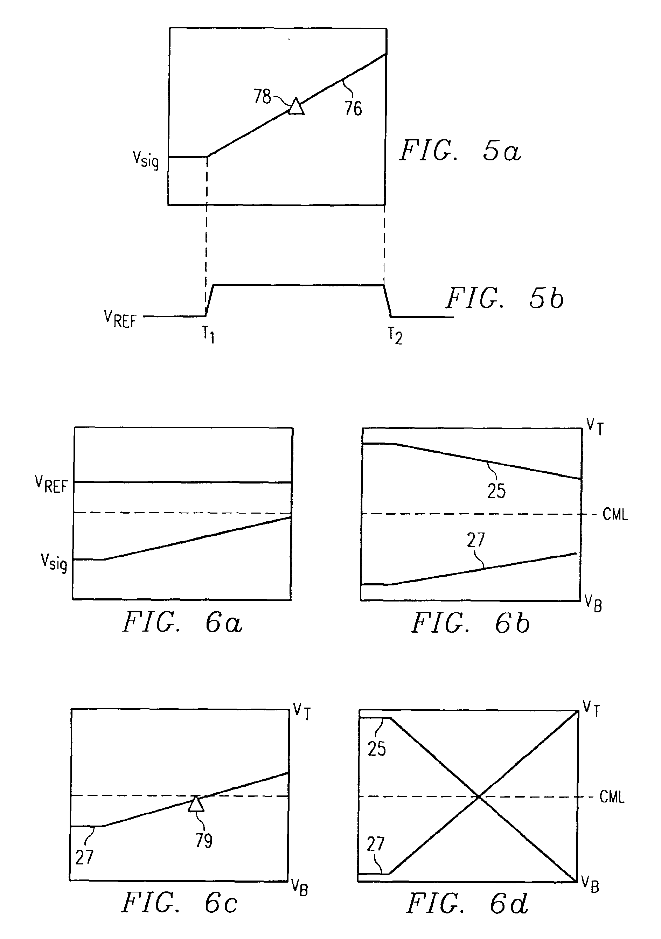

Further details of the process steps for optical black calibration are provided with reference to Figure 4. The process begins with the initiation of a new frame at step 60. In decision step 62, the output $D_{out}$ of the ADC 32 for a known optically black pixel (i.e. a pixel that is shielded by the shield 48) is compared to a threshold value or a threshold range to determine if the output is within the acceptable range for an optically black pixel. Preferably, the ADC 32 will output a value of 64 for such a pixel, with a range of plus or minus 10 being allowed. If the output is within the allowed range, then there is no need to adjust the reference voltage $V_{REF}$ input to the amplifier 24, so the value for $V_{REF}$ is frozen, as indicated by step 64, and processing proceeds to decision step 68. If, on the other hand, the output of the ADC 32 is not within the allowed range, then processing proceeds to step 66 where the value for $V_{REF}$ is adjusted in order to drive the output of the ADC 32 to the value 64, as discussed above with reference to equations 4 and 9. Processing then proceeds to decision step 68 where it is determined whether the row being scanned is still within the optical black region. In the preferred embodiments, the shield 48 blacks out the first four rows of pixels and information from the row / column information register 46 indicates whether the row being scanned is from one of the blacked out rows. If so, the process loops back to decision step 62 for the next row and the loop is repeated until scanning proceeds to a non-blacked out row. If it is determined in decision step 68 that scanning is no longer within the blacked out rows, processing proceeds to step 69. At this point, $V_{REF}$ is frozen and the remainder of the frame rows are scanned and analyzed, until the end of the frame is reached, as indicated by decision step 70. When the end of the frame is reached, processing proceeds to step 72 where $V_{REF}$ is once again adjusted. This time, however, $V_{REF}$ is adjusted, in order to match the characteristics of the entire frame that was just scanned, rather than trying to optimize the optical black value. This is accomplished by determining the average luminance value for the pixels comprising the frame (disregarding the optical black pixels comprising the first four rows), and forcing $V_{REF}$ to a value that will drive the output of the ADC 32 to its midpoint value for an input signal $V_{sig}$ corresponding to the calculated average pixel value.

This concept is illustrated graphically in Figures 5a and 5b. Figure 5a plots the luminance values for a frame over time. Figure 5b provides the time chart for $V_{REF}$ during the scan of one frame. The frame shown in 5a is for illustration only and represents a test pattern in which the first four rows of pixels are blacked out (as shown by the flat portion of luminance curve 76) and then the remaining rows increase from black to bright white as the scan proceeds down the frame (as shown by the sloping portion of luminance curve 76). Obviously, in a typical image, the luminance intensity would vary widely and nonlinearly, but the principles described herein would apply equally.

As shown in Figure 5b, the value for $V_{REF}$ is initially set to some default value, preferably the common mode level of the ADC 32. After the first four rows have been scanned, a new value for $V_{REF}$ is calculated in step 66 of Figure 4 and as indicated by the change in the value of $V_{REF}$ at time $t_1$. Alternatively, the value of $V_{REF}$ could be updated after each pixel in the blacked out rows is scanned or at the end of each of the blacked out rows. Note that the latency between the end of the blacked out rows and the calculation of the value for $V_{REF}$ is preferably minimized by the use of the fast computation allowed by equation 9, and because of the use of fast computational logic 8 on the same chip as the sensor array 6. Once the value for $V_{REF}$ is determined for the optical black pixels, this value is frozen (step 61 of Figure 4) and the remainder of the frame is scanned, as indicated between times $T_1$ and $T_2$.

At time $T_2$, the entire frame has been read and a new value for $V_{REF}$ is calculated based upon the actual frame data. The average luminance value for the frame, as shown at point 78 on Figure 5a, is first calculated. This value is introduced for the value of $V_{sig}$ in equation 4 and $V_{REF}$ is adjusted in order to drive the output of the ADC 32 to its mid-range value. For a preferred ten bit ADC, this mid-range value might be set to 512. The mid-range ADC output value $D_{out}$ is preferably a programmable value that can be selected according to the image being scanned and the user's preferences. Empirical evidence suggests that the ADC output value corresponding to the average luminance intensity 78 should be set to about the 75% point of the ADC's range (say 768 for a ten bit ADC) for best image enhancement.

As shown at time $T_2$ in Figure 5b, $V_{REF}$ is adjusted at the end of the frame (step 72 of Figure 4) and processing repeats for the next incoming frame of luminance data. Simultaneously with the adjustment of $V_{REF}$ at the end of the frame, the gain of the amplifier 24 is also adjusted in order to try to maximize the dynamic range of the ADC 32. This is explained in more detail in the following paragraphs.

Optimizing the Dynamic Range of the ADC

The relationship between the amplifier 24 and the ADC 32 is further illustrated in Figures 6a through 6d. Once again, a test pattern in which the frame gradually and uniformly changes from black to white going from top to bottom (the direction of the scan) will be illustrated. Figure 6a shows the inputs to the amplifier 24 for the scan of one entire frame. Figure 6b illustrates the corresponding differential output 25, 27 from the amplifier 24. Note that $V_{REF}$ is illustrated as having already been adjusted for optical black calibration at the end of the first four rows. Note therefore that the lower component 27 of the differential output signal is at or very near the lower threshold $V_B$ of the ADC 32 as indicated. Note also, however, that the differential output signal 25, 27 does not utilize the full range of ADC 32. In order to employ the full range of the ADC 32, its inputs (in this case differential output 25, 27 from the amplifier 24) must vary across its operating range, i.e. from $V_B$ to $V_T$. In this way, the contrast of the resulting image is enhanced.

Additionally, it would be advantageous to calibrate the system such that the average image data is provided at or near the mid-range of the ADC. These advantages are accomplished as follows.

After the frame has been read, the average luminance value for the frame is calculated. This average brightness value 80 is shown in Figure 6c, which again illustrates the differential output 25, 27 of the amplifier 24. Once the average brightness value, or avg_brt, is calculated, $V_{REF}$ can be adjusted such that the output of the amplifier 24 will drive the ADC 32 to its mid-point range for an incoming luminance value $V_{sig}$ equivalent to the average brightness value. This is illustrated in Figure 6c where the differential output signal 25, 27 is shown as having been shifted up in order to put the average brightness value at the common mode level, or mid-range level of the ADC 32 (for clarity only one component 27 of the differential output signal 25, 27 is illustrated). Preferably, the differential output signal 25, 27 will be shifted up in order to bring the average brightness value to about 75% of $V_T$. In this way, the brighter portions of the image, which are typically the areas of most interest, will be enhanced. In other alternatives, the average brightness value could be shifted to anywhere within the range of the ADC 32. This variability is accomplished by the use of user programmable registers. Note that Figure 6c is illustrative only and does not correspond to actual output signals from the amplifier 24. The drawing merely illustrates the intended result (for the next frame of data) of adjusting $V_{REF}$ after the first frame has been read.

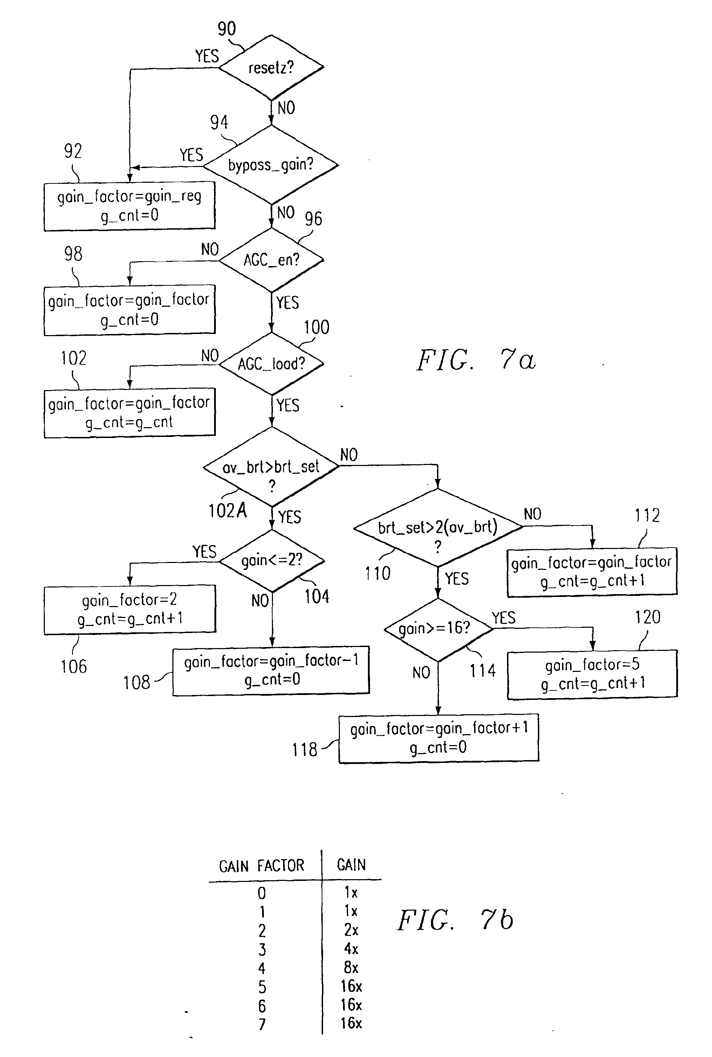

The differential output signal 25, 27 is expanded to extend across the full range of the ADC 32 (or as much is practical) by increasing the gain of the amplifier 24. This increase in gain will adjust the slope of the differential output 25, 27, as shown in Figure 6d. Figure 7 provides additional details regarding the gain adjustment.

Figure 7a is a flow chart illustrating the method of adjusting the gain of the amplifier 24 in order to match its differential output 25, 27 to the range of the ADC 32 for the luminance signal of the last scanned frame. It is expected that the next frame will be similar in luminance values and hence its contrast will be improved by using the gain calculated for the immediately preceding frame. In a first decision step 90, it is determined whether a chip reset has occurred. If so, the process proceeds to step 92 where a gain factor gain is set to a value stored in a register or other memory source. The gain factor is a three bit value, i.e. 0 through 7, that corresponds to the gain of the amplifier 24 as shown in Figure 3b. In preferred embodiments, the amplifier 24 can impose a gain of 1X, 2X, 4X, 8X, or 16X. If a chip reset has not occurred, the process proceeds to step 94 where it is determined whether the imaging logic is operating in user controlled mode, i.e. the automatic image enhancement features have been disabled. In that case, processing proceeds to step 92 where the gain factor is set to a value stored in a register or other memory source. Note that the value can be a pre-programmed default value or can be a value input by the user of the system.

Assuming automatic gain is not disabled by the user, processing continues to decision step 96 where it is determined whether the automatic gain control feature has been temporarily disabled by the system to allow the system time to stabilize after the integration interval has been adjusted. If so, the gain factor is not changed and processing discontinues, as shown in block 98. If automatic gain control is enabled, processing continues to decision step 100 where it is determined if an entire frame has been scanned. If not, the gain factor is unchanged, as shown in step 102. If the end of the frame has been reached, as may be indicated by an end of frame signal from the Row / Column Information Register 45, the processing proceeds to decision step 104 where the average brightness value is calculated. This average brightness value is then compared to a pre-set threshold value. As discussed above, this pre-set threshold value could correspond to the mid-range of the ADC 32 or more preferably to the 75% range.

If the average brightness value is greater than the pre-set threshold value, this indicates that the image is too bright, and the gain should be adjusted downwards. In decision step 104, it is determined whether the gain factor is less than or equal to two, corresponding to the minimum gain value of 2X. If the gain factor is greater than 2, indicating that the gain of the amplifier 24 can be adjusted down, processing continues to step 108 where the gain factor is decremented by one. By reference to Figure 7b it is seen that decrementing the gain factor will cause the gain of the amplifier 24 to be cut in half (assuming the gain factor is at 3, 4, or 5).

On the other hand, if it is determined in decision step 102 that the average brightness is below the threshold value, a second decision step 110 is reached. In decision step 110, it is determined if the threshold value is more than twice as great as the average brightness value. Recall that the gain of amplifier 24 can only be adjusted in multiples of two. Therefore, if the threshold brightness value is not more than twice the current average brightness, there is no reason to double the gain, and hence the gain factor remains unchanged, as shown in step 112. On the other hand, if the gain can be doubled (i.e. the threshold value is greater than twice the average brightness) processing continues to decision step 114 where it is determined if the gain is already at its maximum gain value of 16 (recall that amplifier 24 is limited to a maximum gain of 16). If the gain is not already at its maximum, the gain factor is incremented by one in step 118. If the gain is already at its maximum, the gain factor is set to five. This keeps the gain at its maximum, while also allowing the gain to be halved to eight in one step, if the next frame image is much brighter (i.e. if the process flows to step 108 when calculating the gain for the next frame).

As stated above, the gain of amplifier 24 can only be adjusted in multiplies of two. More precise adjustment in matching the dynamic range of ADC 32 can be obtained by adjusting the integration time, i.e. the exposure time for each frame. As the integration time increases, the incoming pixel signal $V_{sig}$ increases proportionately. From the perspective of the ADC inputs, this is equivalent to increasing the gain of the amplifier 24. The integration time can be adjusted in much finer increments than doubling or halving, however. In the preferred embodiments, a five bit integration factor is employed, corresponding to a value of 0 through 31. Therefore, the integration period can be adjusted in increments of $1/32^{nd}$ of a frame period. The frame period is preferably a programmable value. Preferably the frame period is programmable from 3 frames per second to 100 frames per second or more. In the preferred embodiment, the default value is 30 frames per second.

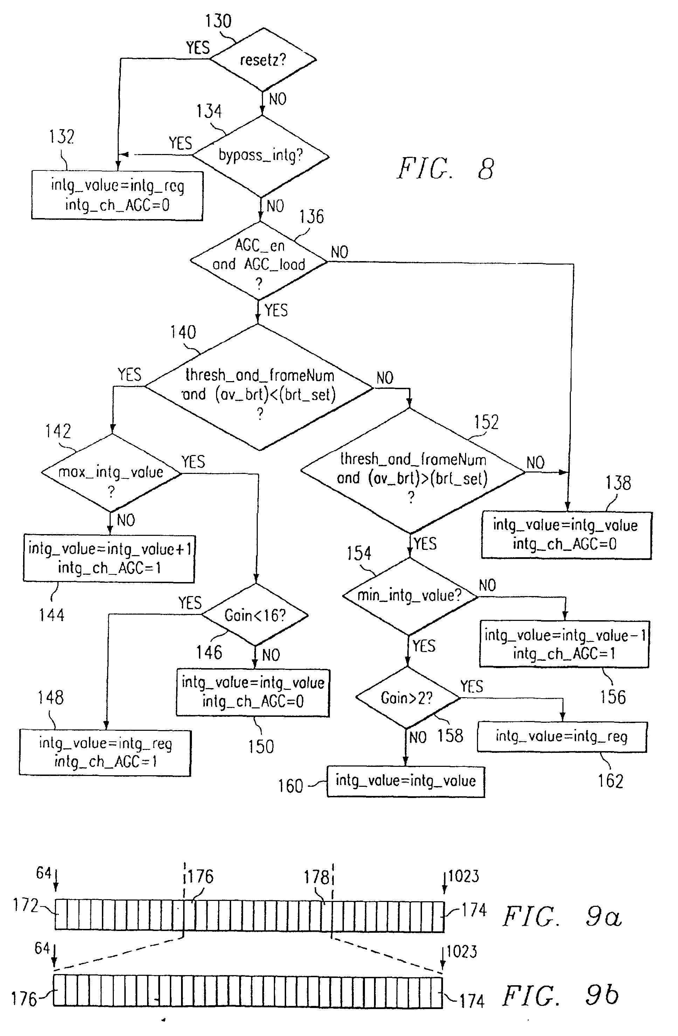

Figure 8 provides a flow chart illustrating a preferred process for adjusting the integration interval. In the preferred embodiment, this adjustment is made immediately after the gain adjustment illustrated in Figure 7a. In a first decision step 130, it is determined whether the system has been reset. If so, the integration factor value is retrieved from an integration interval register. In the preferred embodiment, the integration interval value is set to 16 by default. Likewise, if it is determined in decision step 134 that automatic integration time control has been bypassed by the user, the value is retrieved from the integration interval register as per step 132.

In decision step 136, it is determined whether automatic gain control is enabled (or whether it has been enabled in order to allow the system time to stabilize since the integration interval was last adjusted) and whether the end of the frame has been reached. If not, the integration value remains unchanged as shown in step 138. Otherwise, processing continues to decision step 140 where the average brightness value is compared to the threshold value. If the threshold value is greater than the average brightness, indicating that the integration interval should be increased, processing continues to decision step 142 where it is determined whether the integration interval is already at its maximum value. If not, the integration value is incremented by one, thus increasing the integration interval for the next frame, as shown by step 144.

If the integration value is at its maximum, the gain value for amplifier 24 is checked in decision step 146. If the gain value is less than sixteen, indicating that the gain can be adjusted, then the integration value from the integration interval register is restored, as per step 148. The reason for this is that if the integration interval is at its maximum, but the gain value is not, the gain value can be doubled after the next frame. If the integration value were left at its maximum value, it is likely that doubling the gain in the next frame would overshoot the desired threshold value. On the other hand, if the gain value is already at its maximum, then processing proceeds to step 150 and the integration value is left at its maximum. This represents the situation where the image is quite dark, and the gain and integration values have been adjusted as high as the system will allow.

Returning to decision step 140, if the average brightness value is not less than the threshold value, this indicates that the integration interval may need to be decremented. Processing proceeds to step where it is determined whether the average brightness is greater than the threshold value. If the result of this step is no, this indicates that the average brightness is equal to the threshold (because both decisions 140 and 152 result in a no), and the integration value remains unchanged, as indicated by step 138. On the other hand, if the average brightness value is greater than the threshold value (indicating a need to decrement the integration interval value), processing proceeds to decision step 154 to determine whether the integration interval is already at its minimum value. If not, than the integration value is decremented in step 156.

If the integration interval is already at its minimum value, processing proceeds to decision step 158 where it is determined whether the gain of amplifier 24 is at its minimum. As was discussed above with reference to step 146, if the integration value is already at its endpoint, the gain can perhaps be further adjusted. If the gain is also already at its minimum, however, indicating that no further adjustment can be made, the integration interval remains unchanged, as indicated by step160. If the gain is above its minimum value, indicating that further adjustment can be made, the integration interval value stored in the integration interval register is loaded, step 162, with the expectation that the gain value will be halved at the end of the subsequent frame.

Figure 6d illustrates the ideal differential output 25, 27 of amplifier 24 after adjustment of $H_{REF}$, the gain of the amplifier 24, and the integration interval. In actuality, the frame under consideration will have already passed through the ADC 32 by the time the new reference voltage, gain, and integration interval are calculated. In most instances, however, the subsequent frame will be similar and hence the adjusted values will provide the best possible resolution.

Selective Intensity Resolution Enhancement

Figures 9a and 9b illustrate a further advantageous feature of the preferred embodiments. Selective intensity resolution enhancement allows an end user to specify a portion of the luminance range for enhancement. In Figure 9a, the typical intensity response of the system is shown. Optically black pixels 170 result in a minimum code being output from the ADC 32 (say 64 in the preferred embodiments) whereas fully lit pixels result in a maximum code being output (1024 in the case of a ten bit ADC). Between the darkest pixels and the lightest pixels, the ADC 32 provides 1024 increments of intensity variation.

Assume for a moment, that only a certain portion of the intensity spectrum is of interest to the user, however. As an example, consider an image of an illuminated light bulb on a dark surface. The luminance value of the brightest pixels that will be coded to the maximum code (1023) may be many orders of magnitude greater than the luminance value for the darkest pixels in the image the will be coded to the minimum code (62). Because of the wide variations in luminance value that will be digitized to one of 1024 values, much of the detail in the image will necessarily be lost.

Assume that only a portion of the actual image is of interest, however, such as the filament of the light bulb. Obviously, the pixels associated with the filament are going to be centered about the high end of the luminance spectrum, such as the portion of the spectrum bounded by pixels 176 and 178 in Figure 9a. This portion of the spectrum might be coded into perhaps only 500, or 300 or perhaps fewer digital increments.

In Figure 9b, the desired portion of the spectrum has been expanded to occupy the full range of the ADC output codes, from 64 to 1023. A bordering pixel 176 now results in a minimum output code and a border pixel 178 now results in a maximum output code. Therefore, this portion of the overall spectrum is now represented by a full 1024 digital levels, as opposed to 500, 300 or fewer levels in the original image. As will be apparent from Figure 9b, any pixel with an luminance value of less than that for pixel 176 will appear as black and any pixel with a luminance value of greater than that for pixel 178 will appear as bright white. Therefore, no details or resolution will appear outside of the portion of the luminance spectrum defined by the pixels 176 and 178.

The automatic gain control and optical black calibration discussed above must be disabled in order to realize this advantageous feature. By adjusting $V_{REF}$ so that the ADC 32 outputs the minimum code (say 64) when the incoming pixel signal $V_{sig}$ has the value of the pixel 176, the lower boundary for the desired portion of the spectrum can be defined. The gain, integration time, and reference voltage are then manually adjusted by the user to bring the luminance range between the pixels 176 and 178 to map to the full dynamic range of the ADC 32.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. For instance, while the preferred embodiment circuits and system are implemented in combinational logic using CMOS fabrication processes, other fabrication processes are clearly contemplated. Additionally, the described functionality could be realized using a general purpose microprocessor or digital signal processor running instructions stored in memory. One skilled in the art will recognize that the teachings contained herein apply equally to monochrome and color image processing, as well as to still imaging and video imaging. The described functions could be performed on a frame by frame basis, or alternatively could be performed only on selected frames, or on portions of all or selected frames. Various other modifications and embodiments will be apparent to one skilled in the art. It is therefore intended that the appended claims encompass any such modifications or embodiments.

**Claims**

1. A method of controlling a luminance signal in an image-processing device including the steps of:

   receiving a plurality of selected data signals corresponding to the luminance values of respective picture elements which form a part of an image,
   generating an average value signal representing an average of the values of the plurality of selected data signals,
   generating a reference signal,
   determining a differential signal value representing the difference between the reference signal value and the average value signal and
   so adjusting the reference signal value that the differential signal value corresponds to a selected luminance level within the range of luminance levels which a first part of the image-processing device is capable of accommodating.

2. A method as claimed in claim 1, wherein the reference signal value is so adjusted as to place the differential signal value at the middle level of the range of levels which the first part of the image-processing device is capable of accommodating.

3. A method as claimed in claim 1, wherein the reference signal value is so adjusted as to place the differential signal value at the 75% level of the range of levels which the first part of the image-processing device is capable of accommodating.

4. A method as claimed in any one of claims 1 to 3, including the step of adjusting the gain of a second part of the image-processing device as a means of matching the luminance signal to the range of luminance levels which the first part of the image-processing device is capable of accommodating.

5. A method as claimed in claim 4, wherein the adjustment is to the gain of a part of the image-processing device for generating a differential luminance signal in comparison with the reference signal.

6. A method as claimed in any one of claims 1 to 5, including the step of adjusting the period during which a part of the image-processing device for converting light into an electrical signal receives a light image.

7. A method as claimed in any one of claims 1 to 6, wherein the plurality of selected data signals which are received correspond to the luminance values of picture elements which are black.

8. A method as claimed in claim 1, for controlling a luminance signal in an image-processing device having a programmable amplifier, the programmable amplifier having a reference signal input and a signal input and a programmable gain value and having a differential output coupled to an analog to digital converter (ADC), the analog to digital converter outputting a digital code corresponding to the output of the programmable amplifier,

the method comprising:
reading a frame of luminance data,
determining an average luminance value of the frame and the digital code output by the ADC corresponding to the average luminance value,
calculating a reference signal value that will cause the digital code output by the ADC to be at a selected value when the input to the programmable amplifier is set to the average luminance value,
calculating a gain that will cause the digital code output by the ADC to be at the selected value when the input to the programmable amplifier is set to the average luminance value,
setting the reference signal value and the gain to the calculated values and
reading the next frame.

9. A method as claimed in claim 8, further comprising:

reading an optically black portion of the frame in which the luminance value is at a known luminance reference value and
calculating a reference signal value that will cause the output of the ADC to be at a desired minimum value when the input signal to the programmable amplifier is set to the known reference signal value.

10. A method as claimed in claim 8 or claim 9, wherein the steps occur automatically at the start of each frame.

11. A method as claimed in any one of claims 8 to 10, wherein the steps of determining an average luminance value, calculating a reference signal value, calculating a gain and setting the reference signal value and the gain to the calculated values occur automatically after each frame is read.

12. A method as claimed in any one of claims 8 to 11, wherein the gain is calculated from the difference in (1) the digital code output by the ADC when the signal input to the programmable amplifier is set to the average luminance value, and (2) a pre-determined digital code output by the ADC.

13. A method as claimed in claim 12, wherein the pre-determined output of the ADC is the mid-point of the range of ADC output values.

14. A method as claimed in claim 12, wherein the pre-determined output of the ADC is 75% of the maximum ADC output value.

15. A method as claimed in any one of claims 8 to 14, wherein the luminance data covers a range of luminance values and further comprising:

selecting for enhancement a portion of the range of luminance values, the portion having a minimum desired luminance value and a maximum desired luminance value and
adjusting the reference signal value and gain to cause the digital code output by the ADC to be at its maximum value when the signal input to the programmable amplifier is at the maximum desired luminance value and to cause the digital code output by the ADC to be at its minimum value when the signal input to the programmable amplifier is at the minimum desired luminance value.

16. A means for controlling a luminance signal in an image-processing device including:

means for receiving a plurality of selected data signals corresponding to the luminance values of respective picture elements which form a part of an image,
means for generating an average value signal representing an average of the values of the plurality of selected data signals,
means for generating a reference signal,
means for determining a differential signal value representing the difference between the reference signal value and the average value signal and
means for so adjusting the reference signal value that the differential signal value corresponds to a selected luminance level within the range of luminance levels which a first part of the image-processing device is capable of accommodating.

17. An automatic gain control circuit including a means for controlling a luminance signal as claimed in claim 16, comprising:

an amplifier for receiving as input a frame of a luminance signal and the reference signal and outputting a differential signal corresponding to the difference between the luminance signal and the reference signal, the amplifier amplifying the difference under control of a gain control signal,
a differential analog to digital converter (ADC). for receiving the signal output by the amplifier and outputting a digital signal corresponding to the differential signal output of the amplifier,
means for calculating an average luminance value for the frame,
means for comparing the digital signal output by the ADC when the luminance signal input to the amplifier is at the average luminance value to a desired digital output and generating a difference signal,
means for adjusting the reference signal value in response to the difference signal and
means for adjusting the gain control signal in response to the difference signal.

18. An image processor including an automatic gain control circuit as claimed in claim 17, comprising:

a differential amplifier for receiving as input the luminance signal and the reference signal and outputting the amplified differential signal,
the differential analog to digital converter (ADC) for receiving as input said amplified differential signal and outputting a digital signal corresponding to said amplified differential signal,
a programmable voltage source for outputting said reference signal,
a digital averager for receiving said digital signal and outputting the average luminance value,
a digital signal controller for receiving said average luminance value and outputting a gain control signal to said differential amplifier and a reference control signal to said programmable voltage source,
the gain control signal and the reference control signal being determined from the difference in (1) the digital signal of the analog to digital converter when the luminance input is at the average brightness value and (2) a desired digital signal.

EP 1 067 775 A2

**FIG. 1**

SENSOR ARRAY — 6
IMAGING LOGIC — 8
MICROPROCESSOR — 14
ROM — 16
MEMORY — 12
I/O — 10
4
2

**FIG. 2**

DIGITAL TIMING GENERATOR — 42
SENSOR ARRAY — 6
SCDS — 44
48
BUFFER — 22
PGA — 24 / 25
ADC — 32 / 27
DEFECTIVE PIXEL FILTER — 34
DIGITAL MICROINTERFACE — 36
Vref
REFERENCE CONTROL — 26
GAIN CONTROL — 30
DIGITAL AVERAGE — 38
ROW/COLUMN INFORMATION REGISTER — 46
EXPOSURE TIME CONTROL — 40
DIGITAL SIGNAL CONTROLLER — 28
8
20

$V_{SIG}$

$V_{SIG} - V_{REF}$

25   $V_{INP}$

32   $V_T$

29

$CML = (V_T + V_B)/2$

$V_{CNM}$   27

24

$V_B$

$V_{REF}$

26

52

VOLTAGE SOURCE

54

DAC

$D_{JN}$

*FIG. 3*

---

60   START A NEW FRAME

62   BLACK LEVEL OUT OF RANGE?

NO → FREEZE REF   64

YES

66   ADJUST REF BASED ON DARKNESS

68   WITHIN OPTICAL BLACK REGION?   YES

NO

69   FREEZE REF

END OF FRAME?   NO

70   YES

*FIG. 4*

72   CALCULATE REF BASED ON BRIGHTNESS

FIG. 5a

FIG. 5b

FIG. 6a

FIG. 6b

FIG. 6c

FIG. 6d

90

YES ← resetz?

NO

94

YES ← bypass_gain?

92

gain_factor=gain_reg
g_cnt=0

NO     96

98

NO ← AGC_en?

gain_factor=gain_factor
g_cnt=0

YES

100

102

NO ← AGC_load?

gain_factor=gain_factor
g_cnt=g_cnt

YES

FIG. 7a

av_brt>brt_set
?

NO

102A     YES

gain<=2?

YES

gain_factor=2
g_cnt=g_cnt+1

NO     104

106

108     gain_factor=gain_factor−1
g_cnt=0

brt_set>2(av_brt)
?

NO

110     YES

112

gain_factor=gain_factor
g_cnt=g_cnt+1

gain>=16?

YES

120

NO     114

gain_factor=5
g_cnt=g_cnt+1

118     gain_factor=gain_factor+1
g_cnt=0

| GAIN FACTOR | GAIN |
|:-----------:|:----:|
| 0 | 1x |
| 1 | 1x |
| 2 | 2x |
| 3 | 4x |
| 4 | 8x |
| 5 | 16x |
| 6 | 16x |
| 7 | 16x |

FIG. 7b

16

FIG. 8

FIG. 9a

FIG. 9b